# EUROPEAN PATENT APPLICATION

(11) **EP 4 851 505 A1**
(43) Date of publication of application: **09.12.2026**
(21) Application number: 26182858.6
(22) Date of filing: 03.06.2026
(51) Int. Cl.: F16H 63/50, B60W 30/19, F16H 61/04, F16H 63/46, F16H 59/50

(54) **LEANING VEHICLE**

(30) Priority: 04.06.2025 JP 2025093740
(71) Applicant: Yamaha Hatsudoki Kabushiki Kaisha, Iwata-shi, Shizuoka 438-8501 (JP)
(72) Inventor: OHATA, Shinobu, Iwata-shi, Shizuoka, 438-8501 (JP)
(74) Representative: Stöckeler, Ferdinand

(57) **Abstract**

Provided is a leaning vehicle that achieves, under special environments such as racing environments, both a reduction in the period of grip recovery due to an upshift performed while a rear wheel is slipping, and a gradual transition from a slip state to a grip-recovering state.

A control unit of the leaning vehicle reduces transmitted driving force using a single-period mode to cause the rear wheel to cease slipping and cause a gear shift actuator to disengage dog elements if the leaning vehicle is not in a slip handling state. The control unit reduces the transmitted driving force over both a first period and a second period subsequent to the first period using a multi-period mode to cause the rear wheel to cease slipping and cause the gear shift actuator to disengage the dog elements if the leaning vehicle is in the slip handling state. The control unit sets a rate of decrease in transmitted power in the second period to be higher than a rate of decrease in transmitted power in the single-period mode, and sets a rate of decrease in transmitted power in the first period to be lower than the rate of decrease in transmitted power in the second period.

## Description

### Technical Field

The present teaching relates to a leaning vehicle.

### Background Art

Patent Literature (PTL) 1, for example, discloses a motorcycle that is a leaning vehicle. The motorcycle disclosed in PTL 1 includes a dog-clutch-type automatic transmission. A control unit for the dog-clutch-type automatic transmission reduces the torque of a power source at dog disengagement for gear shifting and, after completion of the dog disengagement, restores the torque of the power source that has been reduced.

### Citation List

### Patent Literature

PTL 1: WO 2023/112324

### Summary of Invention

### Technical Problem

Under special environments such as racing environments, a leaning vehicle is sometimes required to achieve both a reduction in the period of grip recovery due to an upshift performed while a rear wheel is slipping and a gradual transition from a slip state to a grip-recovering state.

An object of the present teaching is to provide a leaning vehicle that achieves, under special environments such as racing environments, both a reduction in the period of grip recovery due to an upshift performed while a rear wheel is slipping and a gradual transition from a slip state to a grip-recovering state.

### Solution to Problem

One traveling method of a leaning vehicle involves causing slip of a rear wheel, which is a drive wheel, relative to the road surface. For example, in a situation in which an off-road vehicle is cornering on a dirt road surface under a special environment such as a racing environment, a power slide is employed, in which the vehicle travels in a leaning posture while slip of the rear wheel is intentionally caused with the throttle in an open state. Causing slip of the rear wheel helps change the heading of the vehicle body within a short time while minimizing decrease in speed. Another traveling method, which is not limited to cornering, involves accelerating the vehicle by outputting a high driving force from a power source to an extent that causes slip of the rear wheel.

The leaning vehicle is sometimes required to perform an upshift even while the rear wheel is slipping.

In a slip state, the rear wheel is subjected simultaneously to resistance due to frictional force from the road surface and driving force that overcomes this frictional force. Thus, the rear wheel rotates while slipping relative to the road surface. A dog-type transmission device transmits this driving force to the rear wheel. That is, engaged dog elements are subjected to driving force being transmitted. The dog elements of the dog-type transmission device are unable to disengage while under such transmitted driving force.

Reducing the transmitted driving force so as to allow the dog elements to disengage causes the slip to decrease and the rear-wheel grip to recover, and these effects continue during the period in which the transmitted driving force is reduced. In a situation in which the leaning vehicle is performing a power slide, for example, grip recovery causes the leaning vehicle to straighten up from the leaning posture, temporarily interrupting the power slide.

One approach to minimizing a period of time during which the leaning vehicle straightens up from the leaning posture is to increase the rate of decrease in the transmitted driving force so that the dog elements can reach a disengageable state more quickly.

However, if the transmitted driving force begins to decrease at a high rate of decrease while the leaning vehicle is in the slip state, the change from the slip state to grip recovery is large. For example, the leaning vehicle undergoes a large change in posture at the start of straightening up from the leaning state.

The inventor of the present teaching conceived the following. That is, in a case where an upshift is performed while the rear wheel is slipping under a special environment such as a racing environment, it is possible to achieve both a reduction in the period of grip recovery due to the upshift performed while the rear wheel is slipping and a gradual transition from a slip state to a grip-recovering state by dividing a period over which the transmitted driving force is reduced and setting the rate of decrease in transmitted power during a preceding first period to be lower than the rate of decrease in transmitted power in a subsequent second period.

If the rear wheel is slipping, the driving force being transmitted to the rear wheel via the dog-type transmission device is reduced over the first period and is further reduced over the subsequent second period. As a result of the decrease in the transmitted driving force in the first period and the second period, the rear wheel ceases slipping and the dog elements become disengageable. The rear wheel ceasing slipping means recovery of the rear-wheel grip. If an upshift is performed while the leaning vehicle is performing a power slide, for example, recovery of rear-wheel grip results in a temporary interruption of the power slide, causing the leaning vehicle to move from a leaning state toward an upright state.

Since the rate of decrease in transmitted power in the first period is lower than the rate of decrease in transmitted power in the second period, the transition from the slip state to the grip-recovering state is gradual. For example, the leaning vehicle in the leaning state begins to straighten up gradually in a situation in which the leaning vehicle is performing a power slide. That is, the leaning vehicle straightens up slowly at the start of straightening up from the leaning state.

Furthermore, since the rate of decrease in transmitted power in the second period is higher than the rate of decrease in transmitted power in the first period, a reduction in the period of the grip-recovering state is achieved. For example, this configuration helps reduce the amount by which the leaning vehicle in the leaning state straightens up, that is, the angle by which the vehicle body straightens up from the lean angle, in a situation in which the leaning vehicle is performing a power slide.

Thus, this configuration makes it possible to achieve both a reduction in the period of grip recovery due to an upshift performed while the rear wheel is slipping under a special environment such as a racing environment and a gradual transition from the slip state to the grip-recovering state.

In order to achieve the object described above, a leaning vehicle according to an aspect of the present teaching has the following configuration.

(1) A leaning vehicle including:
an engine configured to output driving force;
a front wheel;
a rear wheel configured to rotate under the driving force outputted by the engine;
a dog-type transmission device having a gear shift actuator and configured to upshift by disengaging and engaging dog elements using power of the gear shift actuator, and transmit, as transmitted driving force, the driving force from the engine to the rear wheel via the engaged dog elements; and
a control unit configured to control the engine and the gear shift actuator, wherein
for causing the dog-type transmission device to upshift, the control unit switches an operation for reducing the transmitted driving force between a single-period mode and a multi-period mode based on a slip handling state, which represents a state in which slip of the rear wheel has been detected or a state in which a transition to a slip-assuming control state has occurred in response to an operation,
   reduces the transmitted driving force using the single-period mode to cause the rear wheel to cease slipping and cause the gear shift actuator to disengage the dog elements if the leaning vehicle is not in the slip handling state,
   reduces the transmitted driving force over both a first period and a second period subsequent to the first period using the multi-period mode to cause the rear wheel to cease slipping and cause the gear shift actuator to disengage the dog elements if the leaning vehicle is in the slip handling state, and
   sets a rate of decrease in transmitted power in the second period to be higher than a rate of decrease in transmitted power in the single-period mode, and sets a rate of decrease in transmitted power in the first period to be lower than the rate of decrease in transmitted power in the second period.

The leaning vehicle described in (1) includes an engine, a front wheel, a rear wheel, a dog-type transmission device, and a control unit. The engine outputs driving force. The rear wheel is a drive wheel. The rear wheel rotates under the driving force outputted by the engine. The dog-type transmission device has a gear shift actuator. The dog-type transmission device upshifts by disengaging and engaging dog elements using power of the gear shift actuator. The dog-type transmission device transmits, as transmitted driving force, the driving force from the engine to the rear wheel via the engaged dog elements. The control unit controls the engine and the gear shift actuator. For causing the dog-type transmission device to upshift, the control unit reduces the transmitted driving force and causes the gear shift actuator to disengage the dog elements.

For causing the dog-type transmission device to upshift, the control unit switches an operation for reducing the transmitted driving force between a single-period mode and a multi-period mode based on whether or not the leaning vehicle is in a slip handling state. The multi-period mode refers to a mode in which the rate of change is varied between multiple periods over which transmitted power is reduced. The single-period mode refers to a mode in which transmitted power is reduced without varying the rate of change depending on the period. The control unit reduces the transmitted driving force using the single-period mode to cause the gear shift actuator to disengage the dog elements if slip of the rear wheel is not detected. The control unit reduces the transmitted driving force over both the first period and the second period using the multi-period mode if slip of the rear wheel has been detected. In the multi-period mode, the control unit sets the rate of decrease in transmitted power in the first period to be lower than the rate of decrease in transmitted power in the second period. On the other hand, in the single-period mode, the control unit does not vary the rate of decrease in transmitted power until the rear wheel ceases slipping. The single-period mode is a mode in which the rate of decrease in transmitted power is not varied.

If the rear wheel is slipping, the multi-period mode is used, and the driving force being transmitted to the rear wheel via the dog-type transmission device is reduced over the first period and is further reduced over the subsequent second period. As a result of the decrease in the transmitted driving force in the first period and the second period, the rear wheel ceases slipping and the dog elements become disengageable. The rear wheel ceasing slipping means recovery of rear-wheel grip. If an upshift is performed while the leaning vehicle is performing a power slide, for example, recovery of rear-wheel grip results in a temporary interruption of the power slide, causing the leaning vehicle to move from a leaning state toward an upright state.

Since the rate of decrease in transmitted power in the first period is lower than the rate of decrease in transmitted power in the second period, the transition from the slip state to the grip-recovering state is gradual. For example, the leaning vehicle in the leaning state begins to straighten up gradually in a situation in which the leaning vehicle is performing a power slide. That is, the leaning vehicle straightens up slowly at the start of straightening up from the leaning state.

Furthermore, since the rate of decrease in transmitted power in the second period is higher than the rate of decrease in transmitted power in the first period, a reduction in the period of the grip-recovering state is achieved. For example, this configuration helps reduce the amount by which the leaning vehicle in the leaning state straightens up, that is, the angle by which the vehicle body straightens up from the lean angle, in a situation in which the leaning vehicle is performing a power slide.

Thus, this configuration makes it possible to achieve both a reduction in the period of grip recovery due to an upshift performed while the rear wheel is slipping and a gradual transition from the slip state to the grip-recovering state.

It should be noted that the configuration has been described using a power slide as an example, which is visually intuitive because of the lean angle. However, the configuration described in (1) is not limited to a power slide involving the leaning state and, for example, makes it possible to achieve both a reduction in the period of grip recovery due to an upshift and a gradual transition from the slip state to the grip-recovering state also in a situation in which the leaning vehicle accelerates in the upright state while the rear wheel is slipping under a special environment such as a racing environment.

According to an aspect of the present teaching, the leaning vehicle may adopt the following configuration.

(2) The leaning vehicle described in (1), wherein
the control unit performs control to set an amount of decrease in transmitted power in the first period to be smaller than an amount of decrease in transmitted power in the second period.

In the configuration described in (2), the transition from the slip state to the grip-recovering state is gradual because of the first period in which the amount of decrease in transmitted power is smaller than the amount of decrease in transmitted power in the second period. Since the amount of decrease in transmitted power in the first period is smaller than the amount of decrease in transmitted power in the second period, the amount of decrease in transmitted power in the second period accounts for a large proportion of the total amount of decrease in transmitted power over the first period and the second period. Since the rate of decrease is higher and the resulting amount of decrease is greater in the second period, this configuration helps reduce the overall time required for reducing the transmitted driving force over the first period and the second period. Thus, this configuration makes it possible to achieve both a further reduction in the period of grip recovery due to an upshift performed while the rear wheel is slipping and a gradual transition from the slip state to the grip-recovering state.

According to an aspect of the present teaching, the leaning vehicle may adopt the following configuration.

(3) The leaning vehicle described in (1) or (2), further including a clutch having a clutch actuator and configured to be changeable between an engaged state and a disengaged state through driving by the clutch actuator, wherein
for causing the dog-type transmission device to upshift while slip of the rear wheel is detected, the control unit
reduces the transmitted driving force by causing the clutch actuator to change the state of the clutch from the engaged state to another state during the second period, and
reduces the transmitted driving force by reducing the driving force outputted by the engine with the clutch actuator maintaining the state of the clutch in the engaged state during the first period.

In the configuration described in (3), in a case where an upshift is performed while the rear wheel is slipping, the driving force outputted by the engine is reduced with the clutch maintained in the engaged state during the first period, and the clutch is changed from the engaged state to another state during the subsequent second period. The engine that supplies driving force to the dog-type transmission device has inertia itself. As long as the clutch is in the engaged state during the first period, therefore, the amount of decrease in speed, which in other words is deceleration, is mitigated due to the inertia even if the driving force outputted by the engine is reduced. In contrast, changing the state of the clutch from the engaged state to another state during the second period allows the transmitted driving force, which is driving force being transmitted through the dog elements, to be freed from the inertia of the engine, resulting in an increased deceleration.

Since the rate of decrease in transmitted power in the first period is lower than the rate of decrease in transmitted power in the second period, the transition from the slip state to the grip-recovering state is gradual. Furthermore, since the rate of decrease in transmitted power in the second period is higher than the rate of decrease in transmitted power in the first period, a reduction in the period of the grip-recovering state is achieved. Thus, this configuration makes it possible to achieve both a further reduction in the period of grip recovery due to an upshift performed while the rear wheel is slipping and a gradual transition from the slip state to the grip-recovering state at a more advanced level.

The terminology used herein is for defining particular embodiments only and is not intended to limit the teaching. The term "and/or" used herein includes any and all combinations of one or more of the associated listed items. The terms "including", "comprising", or "having", and variations thereof used herein specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both of direct and indirect attachment, connection, and coupling. In addition, the terms "connected" and "coupled" are not restricted to physical or mechanical connection or coupling, and can include direct or indirect electrical connection or coupling. Unless otherwise defined, all terms (including technical and scientific terms) used herein have the same meaning as commonly understood by one of ordinary skill in the art to which the present teaching belongs. Terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

This description describes a novel leaning vehicle. In the description given below, for the purposes of explanation, a number of specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The leaning vehicle refers to a straddled vehicle configured to be capable of making a turn in a leaning posture. The straddled vehicle refers to a vehicle of a type that allows a driver to sit astride a saddle. The leaning vehicle is configured to make a turn in a posture leaning toward the center of a curve. By doing this, the vehicle configured to be capable of making a turn in a leaning posture counteracts centrifugal force acting on the vehicle during the turn. Examples of leaning vehicles include off-road motorcycles. The leaning vehicle is not particularly limited and may be, for example, an on-road motorcycle, a scooter, or a moped. The leaning vehicle may be a motor tricycle. The leaning vehicle is desired to be agile, and therefore responsiveness to a vehicle starting operation for the vehicle to move forward is regarded as important.

Operation of the engine means that the engine outputs, as crankshaft torque and rotation speed, driving force generated through combustion.

The dog-type transmission includes a multi-stage transmission in which at least one drive gear is constantly in mesh with a driven gear. The dog-type transmission according to the present teaching includes a constant-mesh transmission in which all drive gears are in mesh with driven gears, and an engagement of dog elements corresponding to one gear stage is established. The dog-type transmission according to the present teaching performs a gear shifting operation, including an upshift and a downshift, using power of the gear shift actuator. The gear shift actuator is controlled by the control unit. That is, operation of the dog-type transmission according to the present teaching is controlled by the control unit.

The dog-type transmission according to the present teaching is, for example, an AMT (Automated Manual Transmission) that performs gear shifting in response to a rider's switch operation. However, the dog-type transmission according to the present teaching is not particularly limited and may be, for example, an automatic transmission (AT) that performs gear shifting operations based on the speed of the leaning vehicle and the rotation speed of the engine.

The state of the clutch is changeable between an engaged state and a disengaged state. The state of the clutch also includes an intermediate state between the engaged state and the disengaged state. Changing the state of the clutch from the engaged state to another state includes changing the state to the disengaged state or to the intermediate state. The output of the clutch actuator changes the state of the clutch without driving a shifting operation of the dog-type transmission device.

Slip of the rear wheel refers to a condition in which the rear wheel rotates in a rotational direction corresponding to forward travel while sliding against the ground.

The control unit is, for example, implemented by a computer including a central processing unit (CPU) that executes programs and memory that stores programs therein. However, the control unit is not particularly limited and may be implemented by an electronic circuit that does not execute programs.

For example, the control unit reduces the transmitted driving force by reducing the driving force outputted by the engine with the clutch maintained in the engaged state during the first period, and reduces the transmitted driving force by causing the clutch actuator to change the state of the clutch from the engaged state to another state during the subsequent second period. However, the method for reducing the transmitted driving force is not particularly limited. For example, the control unit may reduce the driving force outputted by the engine with the clutch maintained in the engaged state during both the first period and the second period. The control unit may set the rate of decrease in the driving force outputted by the engine in the first period to be lower than the rate of decrease in the second period.

The configuration in which the control unit reduces the transmitted driving force by reducing the driving force outputted by the engine with the clutch maintained in the engaged state during the first period, and reduces the transmitted driving force by causing the clutch actuator to change the state of the clutch from the engaged state to another state during the subsequent second period, for example, makes it possible to achieve both a further reduction in the period of grip recovery and a gradual transition from the slip state to the grip-recovering state at a more advanced level.

### Advantageous Effects of Invention

According to the present teaching, it is possible to provide a leaning vehicle that achieves, under special environments such as racing environments, both a reduction in the period of grip recovery due to an upshift performed while a rear wheel is slipping and a gradual transition from a slip state to a grip-recovering state.

### Brief Description of Drawings

[FIG. 1] A diagram illustrating a leaning vehicle according to an embodiment.
[FIG. 2] A time chart for explaining operations of components for an upshift of the leaning vehicle shown in FIG. 1.

### Description of Embodiments

The following describes embodiments of the present teaching with reference to the drawings.

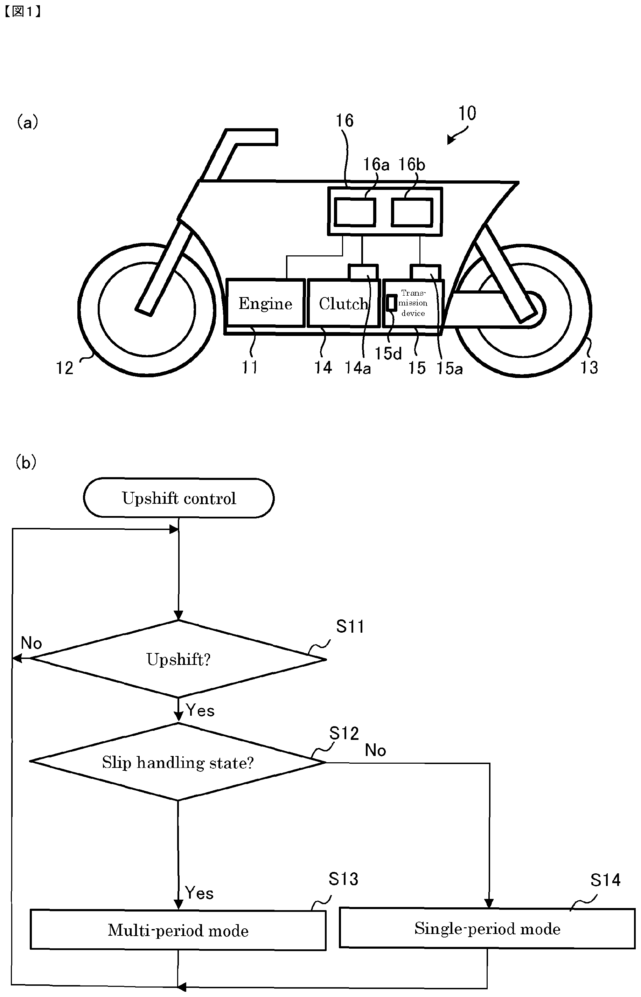

FIG. 1 is a diagram illustrating a leaning vehicle according to an embodiment. Part (a) of FIG. 1 is a side view showing an outline configuration of the leaning vehicle. Part (b) of FIG. 1 is a chart for explaining upshift control.

A leaning vehicle 10 shown in Part (a) of FIG. 1 includes an engine 11, a front wheel 12, a rear wheel 13, a clutch 14, a dog-type transmission device 15 (transmission device), and a control unit 16.

### The engine 11 outputs driving force.

The rear wheel 13 is a drive wheel. The rear wheel 13 rotates under the driving force outputted by the engine 11.

The clutch 14 has a clutch actuator 14a. The clutch 14 is changeable between an engaged state and a disengaged state to change the state of the driving force through driving by the clutch actuator 14a.

The dog-type transmission device 15 shifts between gear stages. The dog-type transmission device 15 upshifts by disengaging and engaging dog elements 15d. The dog-type transmission device 15 also downshifts by disengaging and engaging the dog elements 15d.

The dog-type transmission device 15 transmits, as transmitted driving force, the driving force from the engine 11 to the rear wheel 13 via the engaged dog elements 15d. The dog-type transmission device 15 includes, for example, a gear shift actuator 15a. The dog-type transmission device 15 upshifts or downshifts through driving by the gear shift actuator 15a. The output of the gear shift actuator 15a drives operation of the dog-type transmission device 15 without driving operation of the clutch 14.

The control unit 16 controls the engine 11 and the clutch actuator 14a. The control unit 16 also controls the gear shift actuator 15a.

The control unit 16 is implemented by a computer including a central processing unit (CPU) 16a that executes programs and memory 16b that stores programs therein. The central processing unit 16a reads and executes a program stored in the memory 16b to control the engine 11 and the clutch actuator 14a.

The control unit 16 controls the engine 11 and the clutch actuator 14a. The control unit 16 causes the gear shift actuator 15a to perform an upshift or a downshift of the dog-type transmission device 15 based on at least the rotation speed of the engine 11. Thus, the dog-type transmission device 15 automatically shifts between gear stages without relying on a rider operation. More specifically, the control unit 16 causes the gear shift actuator 15a to perform an upshift of the dog-type transmission device 15 based on a shift map associating at least rotation speeds of the engine 11 and gear stages with each other.

The control unit 16 adjusts the characteristics of the upshift in response to a rider operation. More specifically, the state of the control unit 16 can be set to an off-road mode in response to a rider operation. In the off-road mode, the control unit 16 uses a high-speed map as the shift map for reference. The high-speed map associates higher rotation speeds with gear stages than in the case of a control state other than the off-road mode.

It should be noted that the control unit 16 can, for example, cause an upshift or a downshift of the dog-type transmission device 15 in response to a rider operation. The control unit 16 causes, for example, the gear shift actuator 15a to perform an upshift or a downshift of the dog-type transmission device 15 in response to a rider's operation of a gear shift switch.

For causing the dog-type transmission device 15 to upshift or downshift, the control unit 16 temporarily reduces the transmitted driving force, which is driving force being transmitted through the dog elements 15d. Thus, the control unit 16 can cancel an engagement of the dog elements 15d corresponding to a pre-shift gear stage and establish an engagement of the dog elements 15d corresponding to a post-shift gear stage. The control unit 16 switches the operation mode for reducing the transmitted driving force based on a slip handling state of the leaning vehicle 10. More specifically, the control unit 16 switches the operation for reducing the transmitted driving force between a single-period mode and a multi-period mode based on the slip handling state.

The slip handling state represents, for example, a state in which slip of the rear wheel 13 has been detected. Slip of the rear wheel 13 is detected, for example, when the rotation speed of the rear wheel 13 is higher than the rotation speed of the front wheel 12, and the speed difference between the front wheel 12 and the rear wheel 13 is greater than a speed difference reference value. For another example of a detection method that can be employed, slip of the rear wheel 13 may be detected when the variation in the speed difference between the front wheel 12 and the rear wheel 13 is greater than a reference value. Alternatively, the slip handling state represents a state in which a transition to a slip-assuming control state has occurred. The transition to the slip-assuming control state occurs, for example, in response to a rider operation. The slip-assuming control state is, for example, an off-road mode.

Part (b) of FIG. 1 is a flowchart for explaining the upshift control that is performed by the control unit 16 shown in FIG. 1.

In the case of an upshift (Yes in S11) and a non-slip handling state (No in S12), the control unit 16 reduces the transmitted driving force using the single-period mode (S14). In the single-period mode (S14), the control unit 16 reduces the transmitted driving force, which is driving force being transmitted through the dog elements 15d, by reducing the driving force outputted by the engine 11 with the clutch actuator 14a maintaining the clutch 14 in the engaged state, allowing the dog elements 15d to disengage from each other.

In the case of an upshift (Yes in S11) and a slip handling state (Yes in S12), the control unit 16 reduces the transmitted driving force using the multi-period mode (S13). In the multi-period mode (S13), the control unit 16 reduces the transmitted driving force over both a first period and a second period to cause the rear wheel 13 to cease slipping and cause the gear shift actuator 15a to disengage the dog elements 15d. Furthermore, the control unit 16 sets the rate of decrease in transmitted power in the second period to be higher than the rate of decrease in transmitted power in the single-period mode described above. Furthermore, the control unit 16 sets the rate of decrease in transmitted power in the first period to be lower than the rate of decrease in transmitted power in the second period.

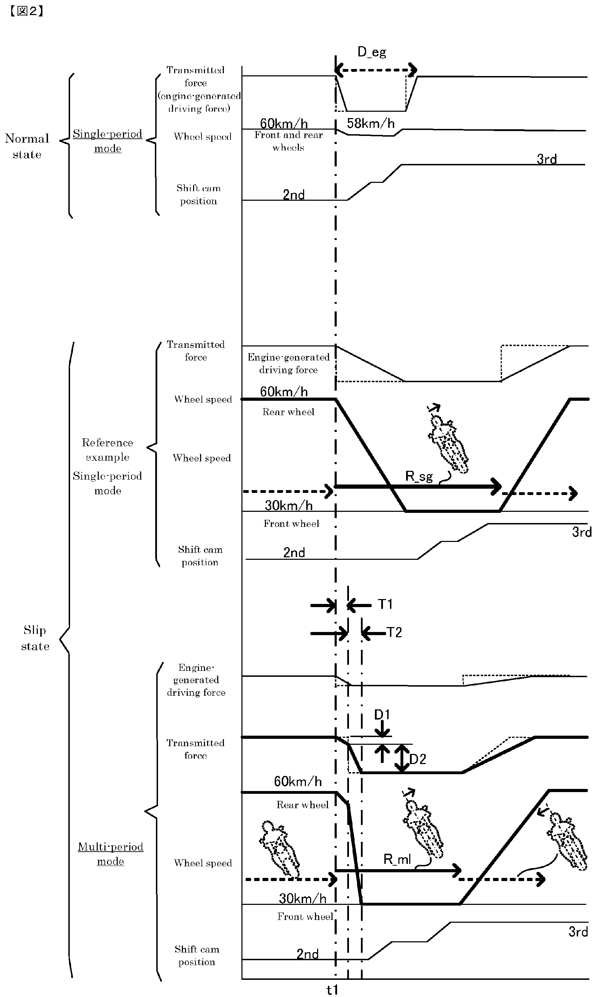

FIG. 2 is a time chart for explaining operations of components for an upshift of the leaning vehicle shown in FIG. 1.

The time chart in FIG. 2 shows the operations of the components in a normal state in which the rear wheel 13 is not slipping and the operations of the components in a slip state in which the rear wheel 13 is slipping. The control unit 16 of the leaning vehicle 10 according to the present embodiment reduces the transmitted driving force using the single-period mode in a case where the leaning vehicle 10 is in the normal state, and reduces the transmitted driving force using the multi-period mode in a case where the leaning vehicle 10 is in the slip handling state. FIG. 2 also shows, as a reference example, how the operations would occur if the transmitted driving force was reduced using the single-period mode in a situation in which the leaning vehicle 10 is in the slip handling state.

The chart in FIG. 2 shows the transmitted driving force (transmitted force), which is driving force being transmitted through the dog elements 15d, the wheel speed of the front and rear wheels, and the shift cam position as specific operations of the components. The transmitted driving force also means driving force being applied to the rear wheel 13 via the dog elements 15d. In addition to the transmitted driving force, FIG. 2 shows changes in a command for controlling the transmitted driving force. For example, with respect to the single-period mode, FIG. 2 shows changes in an output command to the engine 11 using a dashed line in addition to the transmitted driving force. With respect to the shift cam position, FIG. 2 shows an example of the rotational position of the shift cam from when an engagement of the dog elements 15d corresponding to a pre-upshift gear stage is cancelled until an engagement of the dog elements 15d corresponding to a post-upshift gear stage is completed. In order to facilitate an understanding of how the operation progresses, FIG. 2 shows an example of the rotational position of the shift cam from when an engagement of the dog elements 15d corresponding to second gear is cancelled until an engagement of the dog elements 15d corresponding to third gear is completed. A step appearing in a waveform representing the rotational position of the shift cam indicates an example of a location where top faces of the dog elements 15d temporarily make contact with each other before the engagement of the dog elements 15d corresponding to the third gear is completed. Furthermore, in order to facilitate a concrete visualization of how the wheels behave, FIG. 2 shows an example of the wheel speed using a numerical value expressed as an equivalent vehicle speed.

### <Single-period-mode Operations in Normal State>

The following first describes single-period-mode operations in a case where the leaning vehicle 10 is in the normal state. The single-period-mode operations refer to operations in the single-period mode.

At a point in time t1, a series of operations for an upshift begins. First, the control unit 16 outputs, to the engine 11, a command to reduce the output as indicated by a dashed line. In response to the command, the engine 11 reduces the driving force. Due to the inertia of the engine 11, the driving force outputted by the engine 11 gradually decreases over time as indicated by a diagonal line, rather than changing as commanded, which is indicated by the dashed line. Since the clutch 14 is in the engaged state, the driving force outputted by the engine 11 is directly applied as the transmitted driving force to the engaged dog elements 15d.

In the example shown in this chart, the front wheel 12 and the rear wheel 13 are rotating at 60 km/h before the upshift. The following describes the rotation speed using a numerical value expressed as an equivalent vehicle speed. In a situation in which the leaning vehicle 10 is in the normal state, the front wheel 12 and the rear wheel 13 are rotating at substantially the same speed. The transmitted driving force therefore rapidly decreases to near zero within a short time as soon as the driving force outputted by the engine 11, which is located upstream in a driving force transmission path, is reduced. As a result of the transmitted driving force decreasing to near zero, the dog elements 15d become disengageable.

At a point in time when the transmitted driving force decreases to near zero, the control unit 16 performs control to cause the gear shift actuator 15a to rotate the shift cam, thereby cancelling the engagement of the dog elements 15d corresponding to second gear, and subsequently establishing the engagement of the dog elements 15d corresponding to third gear.

At a point in time when the engagement of the dog elements 15d corresponding to third gear is completed, the control unit 16 outputs, to the engine 11, a command to increase and restore the output as indicated by the dashed line associated with the transmitted force. In response to the command, the engine 11 increases the driving force. As a result, the transmitted driving force increases. The speed of the front wheel 12 and the speed of the rear wheel 13 are also restored.

As described above, the series of operations for an upshift is completed. It should be noted that although the actual wheel speed differs before and after the upshift, the influence of this difference in the description of the operations for an upshift is negligible and this difference is therefore disregarded in the description.

Due to the single-period-mode operations, the driving force outputted by the engine 11 is low during a period D_eg from the start of the decrease in the driving force outputted by the engine 11 until the completion of the restoration of the driving force outputted by the engine 11. During this period, the vehicle speed is low.

### <Single-period-mode Operations in Slip State>

Next, the following describes, for reference, single-period-mode operations in a case where the leaning vehicle 10 is in the slip state.

At a point in time t1, a series of operations for an upshift begins. First, the control unit 16 outputs, to the engine 11, a command to reduce the output as indicated by a dashed line. In response to the command, the engine 11 reduces the driving force. Due to the inertia of the engine 11, the driving force outputted by the engine 11 gradually decreases over time as indicated by a diagonal line, rather than decreasing as commanded, which is indicated by the dashed line.

The rear wheel 13 in the slip state is rotating at a higher speed than the front wheel 12. The front wheel 12, which is not slipping, reflects the actual vehicle speed of the leaning vehicle 10. For example, before the upshift, the front wheel 12 is rotating at an equivalent vehicle speed of 30 km/h, while the rear wheel 13 is rotating at 60 km/h. At this time, the rear wheel 13 is subjected simultaneously to resistance due to frictional force from the road surface and driving force from the engine 11 that exceeds this resistance force. Thus, the rear wheel 13 rotates at a higher speed than the front wheel 12.

Even if the speed of the rear wheel 13 decreases due to a decrease in the driving force outputted by the engine 11, the dog elements 15d continue to transmit the driving force until the speed of the rear wheel 13 becomes equal to or lower than the speed of the front wheel 12. That is, the application of the transmitted driving force to the engaged dog elements 15d continues until the speed of the rear wheel 13 becomes equal to or lower than the speed of the front wheel 12, preventing disengagement of the dog elements 15d. When the speed of the rear wheel 13 decreases to become equal to or lower than the speed of the front wheel 12, the transmitted driving force decreases to near zero, enabling disengagement of the dog elements 15d.

At a point in time when the transmitted driving force decreases to near zero, the control unit 16 controls the gear shift actuator 15a, thereby cancelling the engagement of the dog elements 15d corresponding to second gear, and subsequently establishing the engagement of the dog elements 15d corresponding to third gear.

At a point in time when the engagement of the dog elements 15d corresponding to third gear is completed, the control unit 16 outputs, to the engine 11, a command to increase the output as indicated by the dashed line. In response to the command, the engine 11 restores the driving force.

### As described above, upon the control unit 16 outputting to the engine 11 a command to reduce the output at the point in time t1, the rotation speed of the engine 11 begins to decrease, but the amount of decrease in the rotation speed per unit time is small due to the inertia of the engine 11. In other words, the decrease in the rotation speed is gradual. Consequently, it takes a long time until the speed of the rear wheel 13 becomes equal to or lower than the speed of the front wheel 12, enabling disengagement of the dog elements 15d.

At the point in time t1, the rotation speed of the engine 11 begins to decrease, and the speed of the rear wheel 13 also begins to decrease. Thus, from the point in time t1, the rear wheel 13 transitions out of the slip state with time. That is, the slip state diminishes. For example, in a situation in which the leaning vehicle 10 is leaning while performing a power slide, the lean angle decreases as the rear wheel 13 transitions out of the slip state with time from the point in time t1. That is, the power slide is interrupted, and the leaning vehicle 10 straightens up, undergoing a change in posture. The change occurring as the rear wheel 13 transitions out of the slip state with time continues for a period R_sg from the start of the decrease in the transmitted driving force until the start of the increase in the transmitted driving force. That is, this change continues for the period R_sg from when the driving force outputted by the engine 11 begins to decrease until the driving force outputted by the engine 11 begins to increase. After the driving force outputted by the engine 11 has begun to increase, the lean angle increases as the slip state of the rear wheel 13 progresses. That is, the power slide resumes.

In the case of the single-period-mode operations, a period of time during which the leaning vehicle 10 straightens up after the power slide has been interrupted is longer.

### <Multi-period-mode Operations in Slip State>

The control unit 16 according to the present embodiment performs multi-period-mode operations if the leaning vehicle 10 is in the slip state. In the multi-period mode, the control unit 16 reduces the transmitted driving force over both a first period T1 and a second period T2 to cause the rear wheel 13 to cease slipping and cause the gear shift actuator 15a to disengage the dog elements 15d. In the example shown in the chart in FIG. 2, the control unit 16 reduces the transmitted driving force using both engine control and clutch control. In order to facilitate an understanding of the roles of the engine control and the clutch control in the multi-period mode, the chart in FIG. 2 shows the engine-generated driving force and the transmitted driving force (transmitted force) separately.

At a point in time t1, a series of operations for an upshift begins. First, in the first period T1, the control unit 16 outputs, to the engine 11, a command to reduce the output as indicated by a dashed line associated with the engine-generated driving force. In response to the command, the engine 11 reduces the driving force. The engine 11 has inertia, and the rear wheel 13 in the slip state is rotating at a higher speed than the front wheel 12. During the first period T1, therefore, the transmitted driving force and the speed of the rear wheel 13 decrease at the same rate as in the case of the single-period mode described above.

In the second period T2 subsequent to the first period T1, the control unit 16 outputs, to the clutch actuator 14a, a command to change the clutch 14 to the disengaged state as indicated by a dashed line associated with the transmitted force. In response to the command, the clutch 14 transitions to the disengaged state. Upon the clutch 14 transitioning to the disengaged state, the driving force transmission path from the clutch 14 to the rear wheel 13 is freed from the inertia of the engine 11, and thus the resistance due to frictional force from the road surface becomes dominant at the rear wheel 13. Consequently, the rate of decrease in transmitted power in the second period T2 is higher than the rate of decrease in transmitted power in the single-period mode. Furthermore, the rate of decrease in transmitted power in the first period T1 is lower than the rate of decrease in transmitted power in the second period T2.

The rotation speed of the rear wheel 13 therefore decreases more rapidly in the second period T2 than in the first period T1. As a result, for example, the speed of the rear wheel 13 rapidly decreases from 60 km/h to 30 km/h, which is the same speed as the front wheel 12. The rotation speed of the rear wheel 13 becomes equal to or lower than the speed of the front wheel 12 within a short time. When the speed of the rear wheel 13 decreases to become equal to or lower than the speed of the front wheel 12, the transmitted driving force decreases to near zero. As a result of the transmitted driving force decreasing to near zero, the dog elements 15d become disengageable.

At a point in time when the transmitted driving force decreases to near zero, the control unit 16 controls the gear shift actuator 15a, thereby cancelling the engagement of the dog elements 15d corresponding to second gear, and subsequently establishing the engagement of the dog elements 15d corresponding to third gear.

At a point in time when the engagement of the dog elements 15d corresponding to third gear is completed, the control unit 16 causes the clutch actuator 14a to change the clutch 14 to the engaged state as indicated by the dashed line. The control unit 16 causes the clutch 14 to transition to the engaged state via a partially engaged clutch state. The control unit 16 outputs, to the clutch actuator 14a, a command to gradually change the clutch 14 to the engaged state. Furthermore, the control unit 16 outputs, to the engine 11, a command to increase the output. In response to the command, the engine 11 restores the driving force. The driving force being transmitted by the clutch 14 therefore gradually increases. As a result, the speed of the rear wheel 13 is restored.

At the point in time t1, the rotation speed of the engine 11 begins to decrease, and the speed of the rear wheel 13 also begins to decrease. Thus, from the point in time t1, the rear wheel 13 transitions out of the slip state with time. That is, the slip state of the rear wheel 13 diminishes.

For example, in a situation in which the leaning vehicle 10 is leaning while performing a power slide before an upshift, the transmitted driving force begins to decrease and the speed of the rear wheel 13 also begins to decrease at the point in time t1, and the lean angle decreases as the rear wheel 13 transitions out of the slip state with time. That is, the leaning vehicle 10 straightens up, undergoing a change in posture. The change occurring as the rear wheel 13 transitions out of the slip state with time continues for a period R_ml until the start of the transition of the state of the clutch 14 to the engaged state. After the transmitted force has begun to increase, the lean angle increases as the slip state of the rear wheel 13 progresses.

As long as the clutch 14 is disengaged, the rotation of the rear wheel 13 is not affected by the inertia of the engine 11, and the rate of decrease in the transmitted driving force is high. In other words, the decrease in the transmitted driving force is abrupt. A period of time until the speed of the rear wheel 13 becomes equal to or lower than the speed of the front wheel 12, enabling disengagement of the dog elements 15d, is therefore shorter. In other words, the period of the grip-recovering state is shorter.

However, if the transmitted driving force abruptly begins to decrease for an upshift while the leaning vehicle 10 in the slip state, the rear wheel 13 rapidly exits the slip state. For example, the leaning vehicle 10 performing a power slide straightens up from the leaning posture within a short time.

For causing the dog-type transmission device 15 to upshift, the control unit 16 according to the present embodiment switches the operation for reducing the transmitted driving force between the single-period mode and the multi-period mode based on whether or not the leaning vehicle 10 is in the slip handling state. If the leaning vehicle 10 is in the slip handling state, the control unit 16 reduces the transmitted driving force over both the first period T1 and the second period T2 using the multi-period mode. The control unit 16 sets the rate of decrease in transmitted power in the first period T1 in the multi-period mode to be lower than the rate of decrease in transmitted power in the second period T2.

Since the rate of decrease in transmitted power in the first period T1 is lower than the rate of decrease in transmitted power in the second period T2, the transition from the slip state to the grip-recovering state is gradual. For example, the leaning vehicle 10 in the leaning state begins to straighten up gradually in a situation in which the leaning vehicle 10 is performing a power slide. That is, the leaning vehicle 10 straightens up slowly at the start of straightening up from the leaning state, which is included in the first period T1.

Furthermore, since the rate of decrease in transmitted power in the second period T2 is higher than the rate of decrease in transmitted power in the first period T1, a reduction in the period of the grip-recovering state is achieved. For example, this configuration helps reduce the amount by which the leaning vehicle 10 in the leaning state straightens up, that is, the angle by which the vehicle body straightens up from the lean angle, in a situation in which the leaning vehicle 10 is performing a power slide.

Thus, the leaning vehicle 10 according to the present embodiment makes it possible to achieve both a reduction in the period of grip recovery due to an upshift performed while the rear wheel 13 is slipping under a special environment such as a racing environment and a gradual transition from the slip state to the grip-recovering state.

Furthermore, the control unit 16 performs control to set an amount D1 of decrease in transmitted power in the first period T1 to be smaller than an amount D2 of decrease in transmitted power in the second period T2.

In this configuration, the transition from the slip state to the grip-recovering state is gradual because of the first period T1 in which the amount D1 of decrease in transmitted power is smaller than the amount D2 of decrease in transmitted power in the second period T2. The amount D1 of decrease in transmitted power in the first period T1 is smaller than the amount D2 of decrease in transmitted power in the second period T2. Accordingly, the amount D2 of decrease in transmitted power in the second period T2 accounts for a large proportion of the total amount of decrease in transmitted power (D1 + D2) over the first period T1 and the second period T2. Since the rate of decrease in transmitted power is higher and the resulting amount D2 of decrease in transmitted power is greater in the second period T2, this configuration helps reduce the total duration of the first period T1 and the second period T2 (T1 + T2), which is the overall time required for reducing the transmitted driving force. Thus, this configuration makes it possible to achieve both a further reduction in the period of grip recovery due to an upshift performed while the rear wheel 13 is slipping and a gradual transition from the slip state to the grip-recovering state.

### Reference Signs List

10: leaning vehicle
11: engine
12: front wheel
13: rear wheel
14: clutch
14a: clutch actuator
15: dog-type transmission device
15a: gear shift actuator
15d: dog element
16: control unit
T1: first period
T2: second period

## Claims

1. A leaning vehicle (10) comprising:
an engine (11) configured to output driving force;
a front wheel (12);
a rear wheel (13) configured to rotate under the driving force outputted by the engine (11);
a dog-type transmission device (15) having a gear shift actuator (15a) and configured to upshift by disengaging and engaging dog elements (15d) using power of the gear shift actuator (15a), and transmit, as transmitted driving force, the driving force from the engine (11) to the rear wheel (13) via the engaged dog elements (15d); and
a control unit (16) configured to control the engine (11) and the gear shift actuator (15a), wherein
for causing the dog-type transmission device (15) to upshift, the control unit (16) is configured to
switch an operation for reducing the transmitted driving force between a single-period mode and a multi-period mode based on a slip handling state, which represents a state in which slip of the rear wheel (13) has been detected or a state in which a transition to a slip-assuming control state has occurred in response to an operation,
reduce the transmitted driving force using the single-period mode to cause the rear wheel (13) to cease slipping and cause the gear shift actuator (15a) to disengage the dog elements (15d) if the leaning vehicle (10) is not in the slip handling state,
reduce the transmitted driving force over both a first period (T1) and a second period (T2) subsequent to the first period (T1) using the multi-period mode to cause the rear wheel (13) to cease slipping and cause the gear shift actuator (15a) to disengage the dog elements (15d) if the leaning vehicle (10) is in the slip handling state, and
set a rate of decrease in transmitted power in the second period (T2) to be higher than a rate of decrease in transmitted power in the single-period mode, and sets a rate of decrease in transmitted power in the first period (T1) to be lower than the rate of decrease in transmitted power in the second period (T2).

2. The leaning vehicle (10) according to claim 1, wherein
the control unit (16) is configured to perform control to set an amount of decrease in transmitted power in the first period to be smaller than an amount of decrease in transmitted power in the second period (T2).

3. The leaning vehicle (10) according to claim 1 or 2, further comprising a clutch (14) having a clutch actuator (14a) and configured to be changeable between an engaged state and a disengaged state through driving by the clutch actuator (14a), wherein
for causing the dog-type transmission device (15) to upshift while slip of the rear wheel (13) is detected, the control unit (16) is configured to
reduce the transmitted driving force by causing the clutch actuator (14a) to change the state of the clutch (14) from the engaged state to another state during the second period (T2), and
reduce the transmitted driving force by reducing the driving force outputted by the engine (11) with the clutch actuator (14a) maintaining the state of the clutch (14) in the engaged state during the first period.
